# EUROPÄISCHE PATENTANMELDUNG

(11) **EP 3 764 272 A1**
(43) Veröffentlichungstag der Anmeldung: **13.01.2021**
(21) Anmeldenummer: 19185040.3
(22) Anmeldetag: 08.07.2019
(51) Int. Cl.: G06K 9/00, G06K 9/03, G06K 9/32, G07D 7/2033

(54) **SYSTEM UND VERFAHREN ZUM IDENTIFIZIEREN EINES PRÜFOBJEKTS**

(71) Anmelder: Fraunhofer-Gesellschaft zur Förderung der angewandten Forschung e.V., 80686 München (DE)
(72) Erfinder: SAUM, NORBERT, 79110 Freiburg (DE); CARL, DANIEL, 79110 Freiburg (DE)

(57) **Zusammenfassung**

Die Erfindung betrifft ein Objektidentifikationssystem für das Identifizieren eines Prüfobjekts aufweisend eine Objekterfassungseinheit,
die derart eingerichtet und angeordnet ist, dass sie in einem Betrieb des Objektidentifikationssystems mittels einer Mustererfassung ein Muster und ein Prüfobjektmerkmal des Prüfobjekts erfasst und daraus Prüfobjektdaten generiert,
wobei das Muster als ein Bestandteil des Prüfobjekts ausgebildet ist,
wobei das Prüfobjektmerkmal als ein charakteristisches Merkmal des Prüfobjekts ausgebildet ist, und
eine wirksam mit der Objekterfassungseinheit verbundene computergestützte Auswerteeinheit, welche derart eingerichtet ist, dass sie Prüfobjektdaten von der Objekterfassungseinheit erhält und diese Prüfobjektdaten verarbeitet und bereitstellt, aufweisend
eine deaktivierbare Lageidentifikationseinheit,
welche derart ausgebildet und eingerichtet ist, dass sie mit Hilfe des Prüfobjektmerkmals eine Prüfobjektlage bestimmt, wobei die Prüfobjektlage durch die Pose des Prüfobjekts relativ zur Objekterfassungseinheit gebildet ist,
eine Prüfbereichsbestimmungseinheit,
welcher derart ausgebildet und eingerichtet ist, dass sie in der Prüfobjektlage einen Prüfbereich bestimmt, wobei sich der Prüfbereich entlang einer Prüfbereichsbegrenzung auf dem Muster erstreckt,
einen Signaturgenerator,
welcher aus Prüfobjektdaten Signaturdaten extrahiert und daraus eine Prüfbereichssignatur generiert, wobei die Signaturdaten gebildet sind durch diejenigen Prüfobjektdaten, welche innerhalb des Prüfbereichs liegen,
eine Signaturvergleichseinheit,
welche derart ausgebildet und eingerichtet ist, dass sie die Prüfbereichssignatur eines Musters einer zweiten Mustererfassung mit der Prüfbereichssignatur eines Musters einer ersten Mustererfassung vergleicht und daraus eine Signaturabweichung bestimmt, wobei der Prüfbereich des Musters der zweiten Mustererfassung in der gleichen Prüfobjektlage des Prüfobjekts bestimmt ist wie der Prüfbereich des Musters der ersten Mustererfassung,
eine die Signaturabweichung klassifizierende Signaturklassifikationseinheit.

## Beschreibung

### Technisches Gebiet:

Die vorliegende Erfindung betrifft ein Objektidentifikationssystem für das Identifizieren eines Prüfobjekts.

Die vorliegende Erfindung betrifft darüber hinaus ein Verfahren zum Identifizieren eines Prüfobjekts.

Systeme zum Identifizieren von Prüfobjekten werden zu verschiedenen Anlässen eingesetzt. Derartige Systeme kommen beispielsweise zum Einsatz im Bereich der Logistik, also dort wo ein bestimmtes Objekt von einem Ort zu einem anderen Ort verbracht werden soll. Des Weiteren werden derartige Systeme in der industriellen Produktion eingesetzt, beispielsweise, wenn bearbeitete Halbfertigprodukte nachfolgenden Bearbeitungsschritten zugeführt werden sollen. Des Weiteren finden derartige Systeme Anwendung in Bereichen, in denen die Authentifizierung eines Prüfobjekts gelingen soll.

### Stand der Technik:

Zum Identifizieren eines Prüfobjekts im Bereich der Logistik sind seit langer Zeit Aufkleber bekannt. Diese Aufkleber werden auf das Prüfobjekt geklebt und weisen eine eindeutige Identifikationsmöglichkeit auf, beispielsweise einen QR-Code oder einen so genannten RFID-Tag. Nachteilig hieran ist, dass ein derartiger Aufkleber zunächst auf das Prüfobjekt aufgebracht und nach dem Identifizieren des Prüfobjekts wieder entfernt werden muss, um den Ursprungszustand des Prüfobjekts wiederherzustellen. Beim Entfernen bleiben zudem häufig Kleberreste auf dem Prüfobjekt zurück. Des Weiteren ist insbesondere das Entfernen von Aufklebern mit hohem zeitlichen Aufwand verbunden.

Im Bereich der Authentifizierung ist durch die US4641349A ein System und Verfahren zum Identifizieren eines Menschen anhand der Iris seiner Augen offenbart. Hierbei werden gespeicherte Daten von Pupille und Iris eines Menschen mit den Daten aus einer Aufnahme einer Pupille und Iris miteinander verglichen. Sind die verglichenen Daten gleich, so gilt der Mensch als identifiziert. Nachteil dieses Systems und Verfahrens ist, dass lediglich unveränderliche Objekte, wie eine Iris, miteinander verglichen werden können. Ist das zu authentifizierende Objekt natürlichen oder durch Dritte verursachten Veränderungen unterworfen, so scheitert diese Lösung.

Des Weiteren sind Verfahren und Systeme bekannt, welche zur Authentifizierung und Identifizierung eines Objekts einen ausgewählten Prüfbereich einer Objektoberfläche in einer Ersterfassung des Objekts erfassen und daraus eine Signatur generieren. Diese Signatur wird verglichen mit einer Signatur, die Folge einer Erfassung des Prüfbereichs eines Prüflingsbildes sind. Aus dem Signaturvergleich wird anschließend die Authentizität des Prüflings ermittelt.

### Offenbarung der Erfindung:

Es ist Aufgabe der Erfindung, ein System und ein Verfahren zur Objektidentifikation der eingangs genannten Art effizienter zu gestalten.

Diese Aufgabe wird erfindungsgemäß gelöst durch ein Objektidentifikationssystem für das Identifizieren eines Prüfobjekts aufweisend:
eine Objekterfassungseinheit,
   die derart eingerichtet und angeordnet ist, dass sie in einem Betrieb des Objektidentifikationssystems mittels einer Mustererfassung ein Muster und ein Prüfobjektmerkmal des Prüfobjekts erfasst und daraus Prüfobjektdaten generiert,
   wobei das Muster als ein Bestandteil des Prüfobjekts ausgebildet ist,
   wobei das Prüfobjektmerkmal als ein charakteristisches Merkmal des Prüfobjekts ausgebildet ist, und
eine wirksam mit der Objekterfassungseinheit verbundene computergestützte Auswerteeinheit, welche derart eingerichtet ist, dass sie Prüfobjektdaten von der Objekterfassungseinheit erhält und diese Prüfobjektdaten verarbeitet und bereitstellt, aufweisend
   eine deaktivierbare Lageidentifikationseinheit, welche derart ausgebildet und eingerichtet ist,
      dass sie mit Hilfe des Prüfobjektmerkmals eine Prüfobjektlage bestimmt,
      wobei die Prüfobjektlage durch die Pose des Prüfobjekts relativ zur Objekterfassungseinheit gebildet ist,
   eine Prüfbereichsbestimmungseinheit, welche derart ausgebildet und eingerichtet ist,
      dass sie in der Prüfobjektlage einen Prüfbereich bestimmt,
      wobei sich der Prüfbereich entlang einer Prüfbereichsbegrenzung auf dem Muster erstreckt,
   einen Signaturgenerator,
      welcher aus Prüfobjektdaten Signaturdaten extrahiert und daraus eine Prüfbereichssignatur generiert,
      wobei die Signaturdaten gebildet sind durch diejenigen Prüfobjektdaten, welche innerhalb des Prüfbereichs liegen,
   eine Signaturvergleichseinheit,
      welche derart ausgebildet und eingerichtet ist, dass sie die Prüfbereichssignatur eines Musters einer zweiten Mustererfassung mit der Prüfbereichssignatur eines Musters einer ersten Mustererfassung vergleicht und daraus eine Signaturabweichung bestimmt,
      wobei der Prüfbereich des Musters der zweiten Mustererfassung in der gleichen Prüfobjektlage des Prüfobjekts bestimmt ist wie der Prüfbereich des Musters der ersten Mustererfassung,
   eine die Signaturabweichung klassifizierende Signaturklassifikationseinheit.

Das erfindungsgemäße Objektidentifikationssystem weist eine Objekterfassungseinheit und eine damit verbundene computergestützte Auswerteeinheit auf.

Die erfindungsgemäße Objekterfassungseinheit ist ausgebildet und eingerichtet, ein Muster eines Prüfobjekts von zumindest einer Seite zu erfassen. Diese Erfassung des Musters erfolgt punktmäßig, zeilenmäßig oder flächenmäßig. Eine Objekterfassungseinheit ist bevorzugt gebildet durch eine Kamera, die das Muster flächenmäßig erfasst.

Ein Prüfobjekt im Sinne der vorliegenden Erfindung ist ein zu identifizierender Gegenstand. Dieser Gegenstand ist in seiner Erscheinungsform unveränderlich oder veränderlich, d.h. der Gegenstand kann im Zeitverlauf physischen Veränderungen unterworfen sein, beispielsweise durch Bearbeitung oder Alterung. Bei einem Identifizierungsversuch wird das Prüfobjekt vollständig oder auch nur abschnittsweise, beispielsweise stichpunktartig, von zumindest einer Seite des Prüfobjekts, geprüft.

Bevorzugt ist ein Prüfobjekt gebildet durch Rohmaterial, verarbeitete industrielle Halb- und Fertigwaren, Datenträger wie papiergebundene Dokumente und Literatur, Kunstobjekte wie Skulpturen, Bilder oder Fotografien, nichtverarbeitetes und verarbeitetes Holz sowie Holzprodukte, Papier oder Pappe oder Produkte daraus, Luxusprodukte wie Uhren oder Schmuck, Textilien jeglicher Art, Zahlungsmittel wie Münzen und Scheine sowie kartengebundene Zahlungsmittel, Möbel wie Tische, Stühle, Schränke oder Lampen, Medikamente, Medikamentenverpackungen oder Lebensmittel. Die vorstehende Aufzählung ist nur beispielhaft und nicht abschließend.

Im Sinne der vorliegenden Erfindung ist das Prüfobjekt ferner durch einen Aufkleber oder eine Verpackung gebildet. In diesem Fall ist der Aufkleber oder die Verpackung nicht Teil des Objekts auf dem es aufgebracht ist oder welches es zumindest teilweise umgibt.

Ein Prüfobjekt ist nicht durch eine Palette gebildet. Eine Palette ist eine Anordnung für Transport, Lagerung und/oder Bündelung eines Objekts oder mehrerer Objekte und zeichnet sich aus durch eine flache Konstruktion und ist meist platzsparend stapelbar. Eine Palette ist gebildet aus Holz, Kunststoff, Metall, Pappe oder einer Kombination der vorgenannten Materialien. Häufig verfügt eine Palette über seitliche Aussparungen, um sie mit Hilfe eines Flurfördergeräts, beispielsweise eines Gabelstaplers, zu transportieren. Das Prüfobjekt ist insbesondere nicht durch eine so genannte Europalette gebildet.

Im Sinne der Erfindung ist ein Muster ein Bestandteil des Prüfobjekts, welches mit Hilfe der Objekterfassungseinheit erfasst wird. Als Bestandteil des Prüfobjekts kann das Muster nicht vom Prüfobjekt getrennt werden, ohne dass das Muster und/oder das Prüfobjekt zerstört oder zumindest eines der beiden in seinem Wesen stark verändert wird. Das Muster ist als nicht selbstständig anzusehen, sondern als zum Prüfobjekt gehörend. Ein Muster ist beispielsweise eine Ecke, eine Kante, ein bestimmter Winkel, ein Buchstabe, eine Zahl, ein Zeichen. Bevorzugt ist ein Muster eine Maserung, ein Höhen-Tiefenprofil, eine Oberflächenstruktur, eine Linie, eine Linienkombination, eine Farbe, eine Farbkombination, ein Grauwert, eine Grauwertkombination, ein Farbverlauf, ein Grauwertverlauf oder eine Kombination zweier oder mehrerer der vorgenannten Merkmale. Beispielhaft und nicht abschließend ist ein Muster gebildet durch eine Maserung eines Holzes oder Holzwerkstoffs, eine Feinstruktur eines Papiers oder einer Pappe, einer Struktur einer Metall- oder Kunststoffoberfläche.

Da das erfindungsgemäße Objektidentifikationssystem der Identifikation eines Prüfobjekts dient, können im Sinne der Erfindung das Prüfobjekt der ersten Mustererfassung und das Prüfobjekt der zweiten Mustererfassung identisch oder verschieden zueinander sein. Die Verschiedenartigkeit der beiden vorgenannten Prüfobjekte, d.h. bei erster und zweiter Mustererfassung, kann Folge einer gewollten oder ungewollten Bearbeitung oder Veränderung eines Prüfobjekts zwischen den beiden vorgenannten Mustererfassungen sein.

Regelmäßig erfolgt die erste Mustererfassung des Musters zeitlich vor der zweiten Mustererfassung des Musters.

Die Objekterfassungseinheit erfasst bei der Mustererfassung das Muster des Prüfobjekts sowie zumindest ein Prüfobjektmerkmal und generiert daraus Prüfobjektdaten.

In einer bevorzugten Ausführungsform der Erfindung wird bei der Mustererfassung ein Prüfobjektmerkmal des Prüfobjekts erfasst.

Ein Prüfobjektmerkmal ist ein charakteristisches Merkmal eines Prüfobjekts wie beispielsweise eine Ecke, eine Kante, ein bestimmter Winkel, eine Bohrung, eine Nut, ein Buchstabe, eine Zahl, ein Zeichen, eine Maserung, ein Höhen-Tiefenprofil, eine Oberflächenstruktur, eine Linie, eine Linienkombination, eine Farbe, eine Farbkombination, ein Grauwert, eine Grauwertkombination, ein Farbverlauf, ein Grauwertverlauf, die teilweise oder vollständige Außenkontur des Prüfobjekts, der Mittelpunkt eines zwei- oder dreidimensionalen Abschnitts des Prüfobjekts oder eine Kombination zweier oder mehrerer der vorgenannten Merkmale. Bevorzugt ist das Prüfobjektmerkmal ein dauerhaftes Merkmal.

In einer weiteren Ausführungsform der Erfindung ist das Prüfobjektmerkmal erst mit Hilfe weiterer Maßnahmen identifizierbar, beispielsweise mittels UV-Bestrahlung.

In einer Ausführungsform der Erfindung wird bei der Mustererfassung neben einem ersten Prüfobjektmerkmal zumindest ein weiteres Prüfobjektmerkmal des Prüfobjekts erfasst. Dies ist unter anderem relevant, wenn beispielsweise das Prüfobjekt einem Bearbeitungsprozess unterworfen ist und als Folge dieses Bearbeitungsprozesses ein erstes Prüfobjektmerkmal verändert, beschädigt oder entfernt wurde. In einem solchen Fall wird unter Verwendung zumindest eines weiteren Prüfobjektmerkmals die Prüfobjektlage und der Prüfbereich bestimmt. Dies ermöglicht eine Feststellung von Übereinstimmung oder Abweichung zweier Prüfobjekte im Fall der Beschädigung, Veränderung oder Entfernung eines Prüfobjektmerkmals. In einem derartigen Fall der Veränderung, Beschädigung oder Entfernung eines ersten Prüfobjektmerkmals gelingt mit Hilfe des weiteren Prüfobjektmerkmals trotzdem die Bestimmung eines Prüfbereichs und eröffnet damit die Möglichkeit zur Signaturgenerierung und zum Signaturvergleich.

Die Erfassung mehrerer Prüfobjektmerkmale bietet also eine höhere Wahrscheinlichkeit, ein Prüfobjekt zu identifizieren.

Die Objekterfassungseinheit ist mit einer computergestützten Auswerteeinheit verbunden. Die computergestützte Auswerteeinheit ist dazu ausgebildet und eingerichtet, dass sie Prüfobjektdaten von der Objekterfassungseinheit erhält und diese verarbeitet und bereitstellt.

In einer Ausführungsform der Erfindung besteht das Verarbeiten der Prüfobjektdaten lediglich im Speichern dieser Prüfobjektdaten.

Die Prüfobjektdaten aus der Erfassung des Musters des Prüfobjekts enthalten die Lagedaten der Objekterfassungseinheit implizit oder explizit.

Die expliziten Lagedaten der Objekterfassungseinheit sind diejenigen Lagedaten, welche die Objekterfassungseinheit beispielsweise mit Hilfe von Sensoren wie GPS oder Neigungssensoren erfasst und bereitstellt. Derartige Daten sind unter anderem die absolute Lage der Objekterfassungseinheit und dessen Neigung in den Raumrichtungen.

Die Lagedaten der Objekterfassungseinheit relativ zum Muster des Prüfobjekts sind implizit in den Prüfobjektdaten enthalten, da das erfasste Muster nur in einer einzigen Lage der Objekterfassungseinheit gegenüber dem Muster genau in dieser Art zu erfassen ist. Mit Hilfe eines Prüfobjektmerkmals und dieser in den Prüfobjektdaten implizit enthaltenen Lagedaten der Objekterfassungseinheit wird durch eine Lageidentifikationseinheit eine Prüfobjektlage bestimmt. Die Prüfobjektlage ist durch die Pose des Prüfobjekts relativ zur Objekterfassungseinheit bestimmt. Die Pose des Prüfobjekts ist die Kombination von Position und Orientierung des Prüfobjekts im dreidimensionalen Raum. Die Ermittlung der Prüfobjektlage des Prüfobjekts erfolgt insbesondere durch Bestimmung von Daten, welche Position, Größe und Bildschärfe des Prüfobjektmerkmals beschreiben. Auch die Orientierung des Prüfobjektmerkmals ist zur Ermittlung der Prüfobjektlage verwendbar. Für die Bestimmung der Prüfobjektlage des Prüfobjekts bei der ersten und bei der zweiten Musterfassung wird das gleiche Prüfobjektmerkmal verwendet.

Die Daten, welche die Prüfobjektlage der ersten Mustererfassung beschreiben, werden gespeichert.

In einer bevorzugten Ausführungsform der Erfindung werden die Daten, welche die Prüfobjektlage der ersten Mustererfassung des Prüfobjekts beschreiben, als Referenzprüfobjektlage gespeichert. Bei einer Mustererfassung eines neu erfassten Prüfobjekts wird zur Bestimmung von dessen Prüfobjektlage die Referenzprüflage genutzt, indem die Prüfobjektlage des neu erfassten Prüfobjekts in Relation zur Referenzprüflage bestimmt wird.

In einer bevorzugten Ausführungsform der Erfindung ist das Prüfobjektmerkmal nicht durch das Muster oder ein Teil des Musters gebildet. Das bedeutet Prüfobjektmerkmal und Muster unterscheiden sich voneinander. Bei einer derartigen Ausführungsform der Erfindung ist das Prüfobjektmerkmal beispielsweise gebildet durch eine Kante des Prüfobjekts und das Muster beispielsweise durch eine Maserung.

In einer anderen Ausführungsform der Erfindung ist das Prüfobjektmerkmal gebildet aus der Kombination von abschnittsweisem oder vollständigem Prüfobjektmerkmal selbst, beispielsweise eine Buchstabenkombination, und abschnittsweisem oder vollständigem Muster, beispielsweise eine Maserung. In dieser Ausführungsform der Erfindung dient die vorbeschriebene Kombination von Prüfobjektmerkmal und Muster der Ermittlung von Prüfobjektlage des Prüfobjekts und Bestimmung des Prüfbereichs und der Prüfbereichssignatur.

In einer weiteren Ausführungsform der Erfindung ist das Prüfobjektmerkmal teilweise oder vollständig aus dem Muster gebildet. In dieser Ausführungsform bildet ein Höhen-Tiefenprofil auf dem Prüfobjekt sowohl das Muster als auch das Prüfobjektmerkmal.

In einer weiteren Ausführungsform der Erfindung ist ein Prüfobjekt bei stationärer Objekterfassungseinheit bei der zweiten Mustererfassung in der gleichen Pose relativ zur Objekterfassungseinheit positioniert, das heißt in der gleichen Prüfobjektlage, wie bei der ersten Mustererfassung. In einem derartigen Fall ist die Auswertung des Prüfobjektmerkmals zur Bestimmung der Prüfobjektlage des Prüfobjekts und damit auch die Nutzung der Lageidentifikationseinheit entbehrlich. In diesem Fall kann die Lageidentifikationseinheit deaktiviert werden. Dies ist beispielsweise der Fall, wenn die Objekterfassungseinheit statisch gegenüber dem Prüfobjekt angeordnet ist und die Prüfobjekte, wie bereits beschrieben, immer in der gleichen Pose zur Objekterfassungseinheit angeordnet sind, beispielsweise auf einem Fließband auf dem die Prüfobjekte entsprechend angeordnet sind. Im einem derartigen Fall wird das Prüfobjektmerkmal lediglich zur Bestimmung des Prüfbereichs verwendet.

Mit Hilfe eines Prüfobjektmerkmals wird ein Prüfbereich auf dem Muster bestimmt.

Ein Prüfbereich ist ein Bereich, der sich auf dem Muster des Prüfobjekts erstreckt. Der Prüfbereich erstreckt sich entlang einer Prüfbereichsbegrenzung auf dem Muster. Der Prüfbereich ist regelmäßig virtueller, nicht dauerhafter Natur. Der Prüfbereich kann verschiedene geometrische Formen annehmen.

In einer Ausführungsform der Erfindung erstreckt sich der Prüfbereich von einem Prüfbereichsursprung entlang definierter Prüfbereichskoordinaten oder einer definierten Prüfbereichsabmessung auf dem Muster.

In einer bevorzugten Ausführungsform der Erfindung ist der Prüfbereich rechteckig ausgebildet. In einer anderen Ausführungsform der Erfindung ist der Prüfbereich rund ausgebildet.

Zusammengefasst dient ein Prüfobjektmerkmal der Bestimmung eines Prüfbereichs auf dem Muster des Prüfobjekts und/oder der Ermittlung der Prüfobjektlage des Prüfobjekts.

Aus den Prüfobjektdaten generiert ein Signaturgenerator Signaturdaten. Hierzu werden zunächst aus den Prüfobjektdaten diejenigen Prüfobjektdaten extrahiert, welche innerhalb des Prüfbereichs liegen. Diese extrahierten Prüfobjektdaten bilden die Signaturdaten. Aus diesen Signaturdaten wird nachfolgend von dem Signaturgenerator eine Prüfbereichssignatur generiert. Mit anderen Worten ausgedrückt: Entsprechend der Prüfbereichsbegrenzungen werden aus den Prüfobjektdaten die Signaturdaten sozusagen herausgeschnitten. Aus diesen Signaturdaten bildet der Signaturgenerator die Prüfbereichssignatur.

In einer Ausführungsform der Erfindung erstreckt sich der Prüfbereich nur abschnittsweise auf dem Muster. Dies hat den Vorteil, dass nicht die Prüfobjektdaten der gesamten Fläche des Musters oder gar des gesamten Prüfobjekts zu verarbeiten sind.

Eine Prüfbereichssignatur fasst regelmäßig individuelle Charakteristika eines Musters des Prüfbereichs in einer komprimierten Darstellung zusammen. Sie ist regelmäßig aus einer Folge von Zahlen, Buchstaben und/oder Zeichen gebildet. Bevorzugt ist eine Prüfbereichssignatur aus einer Folge von Nullen und Einsen gebildet. Die durch eine Prüfbereichssignatur zusammengefassten individuellen Charakteristika eines Musters sind eine Maserung, ein Höhen-Tiefenprofil, eine Oberflächenstruktur, eine Linie, eine Linienkombination, eine Farbe, eine Farbkombination, ein Grauwert, eine Grauwertkombination, ein Farbverlauf, ein Grauwertverlauf aber auch eine Ecke, eine Kante, ein bestimmter Winkel, ein Buchstabe, eine Zahl, ein Zeichen, eine Mehrzahl eines der vorgenannten Merkmale oder eine Kombination zweier oder mehrerer der vorgenannten Merkmale.

In einer Ausführungsform der Erfindung wird jede vom Signaturgenerator generierte Prüfbereichssignatur gespeichert.

In einer bevorzugten Ausführungsform der Erfindung wird die Prüfbereichssignatur mit einem Identifikator versehen, sodass jede Prüfbereichssignatur zu identifizieren ist. Die Prüfbereichssignatur wird zusammen mit dem Identifikator gespeichert.

Im Sinne der vorliegenden Erfindung ist ein Identifikator ein eindeutiges und nur einmal vorkommendes Kennzeichen einer Prüfbereichssignatur. Ein derartiger Identifikator besteht bevorzugt aus Buchstaben, Zahlen, Zeichen oder einer Kombination daraus.

Ein Identifikator ist in einer bevorzugten Ausführungsform der Erfindung einem Produkt oder Erzeugnis zugeordnet. Dieses Versehen der Prüfbereichssignatur mit einem Identifikator dient unter anderem der Rückverfolgbarkeit eines Prüfobjekts, beispielsweise im Rahmen eines Qualitätsmanagements.

Die Signaturvergleichseinheit vergleicht die Prüfbereichssignatur des Musters einer ersten Mustererfassung mit der Prüfbereichssignatur des Musters einer zweiten Mustererfassung und generiert daraus eine Signaturabweichung. Hierfür ist es erforderlich, dass der Prüfbereich bei der zweiten Mustererfassung in der gleichen Prüfobjektlage bestimmt wird wie bei der ersten Mustererfassung. Die Signaturabweichung wird von der Signaturklassifikationseinheit klassifiziert.

In einer bevorzugten Ausführungsform der Erfindung werden nur Prüfbereichssignaturen verglichen, welche aus Prüfbereichen bestimmt sind, welche die gleiche geometrische Ausbildung und die gleiche Fläche aufweisen.

In einer weiteren Ausführungsform der Erfindung werden zwei formal unterschiedlich große Prüfbereiche miteinander verglichen. In einem derartigen Fall wird der kleinere Prüfbereich einer Mustererfassung in dem größeren Prüfbereich einer anderen Mustererfassung bestimmt und dann die beiden flächen- und abmessungsmäßig gleichen Prüfbereiche miteinander verglichen.

In einer Ausführungsform der Erfindung wird die Prüfbereichssignatur einer zweiten Mustererfassung bei der erneuten Erfassung des Prüfobjekts als Referenz genutzt. Es wird also faktisch eine aktualisierte Prüfbereichssignatur erhalten, welche für eine folgende Identifizierung des Prüfobjekts als Referenz nutzbar ist. Zusammengefasst ausgedrückt: Die Prüfbereichssignatur ist im Produktions-/Verarbeitungsprozess aktualisierbar. Auch bei Alterung des Prüfobjekts kann die Prüfbereichssignatur sozusagen parallel zum Prüfobjekt "mitaltern" und ermöglicht auch die Identifizierung eines gealterten Prüfobjekts.

In einer Ausführungsform der Erfindung klassifiziert die Signaturklassifikationseinheit die Signaturabweichung anhand zumindest eines Signaturschwellwerts, beispielsweise anhand statistischer Methoden. Ein geeigneter Signalschwellwert ist beispielsweise die Ähnlichkeit der Prüfbereichssignatur eines Prüfobjekts zur Gesamtheit der Prüfbereichssignaturen aller anderen Prüfobjekte. Liegt die Signaturabweichung des zu identifizierenden Prüfobjekts unter dem des als noch ausreichend definierten Signaturschwellwertes, so ist die Signaturabweichung als gering anzusehen und das Prüfobjekt wird als identifiziert angesehen. Liegt hingegen die Signaturabweichung des zu identifizierenden Prüfobjekts über dem des als noch ausreichend definierten Signaturschwellwert, so ist die Signaturabweichung als groß anzusehen und das Prüfobjekt wird als nicht identifiziert angesehen.

In einer weiteren Ausführungsform der Erfindung erfolgt die Signaturklassifizierung einer erfolgreichen Identifizierung eines Prüfobjekts wie folgt. Die Prüfbereichssignatur des zu identifizierenden Prüfobjekts wird mit allen verfügbaren Prüfbereichssignaturen verglichen. Dies erfolgt in zwei Schritten. Erster Schritt: Liegt die Signaturabweichung zweier Prüfbereichssignaturen unterhalb des Schwellwerts der noch als ausreichend definiert ist, so sind diese beiden zwei Prüfbereichssignaturen ähnlich. Zweiter Schritt: Diese als ähnlich identifizierte Prüfbereichssignatur muss gegenüber den anderen Prüfbereichssignaturen unähnlich sein, d.h. die Signaturabweichung gegenüber den anderen Prüfbereichssignaturen muss deutlich über dem Schwellwert liegen.

In einer Ausführungsform der Erfindung ist die computergestützte Auswerteeinheit mit einer Signalisierungseinheit verbunden. Die Signalisierungseinheit signalisiert eine von der Signaturklassifikationseinheit klassifizierte Signaturabweichung.

In einer bevorzugten Ausführungsform der Erfindung wird eine noch als ausreichend oder als nicht mehr ausreichend klassifizierte Signaturabweichung, beispielsweise durch "Signatur erkannt" beziehungsweise "Signatur nicht erkannt" oder "Prüfobjekt identifiziert" beziehungsweise "Prüfobjekt nicht identifiziert" signalisiert.

In einer weiteren Ausführungsform der Erfindung signalisiert die Signalisierungseinheit eine Übereinstimmung des Prüfbereichs der zweiten Mustererfassung mit dem Prüfbereich der ersten Mustererfassung beispielsweise durch Anzeigen von "Prüfbereich ok" oder "Prüfbereich gefunden" oder eine Abweichung des Prüfbereichs der zweiten Mustererfassung zu dem Prüfbereich der ersten Mustererfassung durch Anzeigen von "Prüfbereich nicht ok" oder "Prüfbereich nicht gefunden".

Damit der Prüfbereich der zweiten Mustererfassung mit dem Prüfbereich der ersten Mustererfassung eine Übereinstimmung zeigen kann, ist eine Voraussetzung, dass beide Prüfbereiche in der gleichen Prüfobjektlage bestimmt werden. Dabei gilt eine geringfügige Abweichung in der Prüfobjektlage bei erster und zweiter Mustererfassung noch als gleiche Prüfobjektlage. Eine geringfügige Abweichung der Prüfobjektlage ist insbesondere eine Abweichung von wenigen Prozent.

In einer weiteren Ausführungsform der Erfindung ist die Abweichung in der Prüfobjektlage bei erster und zweiter Mustererfassung mittels eines Schwellwerts klassifiziert. Unterhalb dieses Schwellwerts gilt eine Abweichung in der Prüfobjektlage bei erster und zweiter Mustererfassung noch als geringfügig und damit als gleiche Prüfobjektlage und oberhalb dieses Schwellwerts gilt die Prüfobjektlage als unterschiedlich.

In einer weiteren Ausführungsform der Erfindung ist die Signalisierungseinheit derart ausgebildet und eingerichtet, dass sie signalisiert, welche Operationen auszuführen sind, um den übereinstimmenden Prüfbereich zu finden, beispielsweise durch Hinweise "nach links" beziehungsweise "nach rechts", "nach oben" beziehungsweise "nach unten", "rotieren im Uhrzeigersinn" beziehungsweise "rotieren entgegen dem Uhrzeigersinn", "Abstand verringern" beziehungsweise "Abstand vergrößern" oder eine Kombination aus zumindest zweien der Vorgenannten.

In einer weiteren Ausführungsform der Erfindung ist die Signalisierungseinheit derart ausgebildet und eingerichtet, dass sie die Prüfbereichsabweichung, die Prüfbereichsübereinstimmung, die Signaturabweichung, die Signaturübereinstimmung oder eine Kombination mindestens zweier davon signalisiert.

Das Signalisieren erfolgt insbesondere mittels eines optischen Signals, eines akustischen Signals, eines elektrischen Signals, eines haptischen Signals, beispielsweise in der Art einer Vibration, oder einer Kombination zweier oder mehrerer davon.

Die Lageidentifikationseinheit, der Prüfbereichsbestimmungseinheit, der Signaturgenerator, die Signaturvergleichseinheit und die Signaturklassifikationseinheit sind Teil der computerstützten Auswerteeinheit. Die Komponenten der computerstützten Auswerteeinheit können einzeln oder in Kombination mindestens zweier Komponenten auch auf getrennten Systemen laufen.

Die Lageidentifikationseinheit ist deaktivierbar ausgebildet.

Mit anderen Worten ausgedrückt funktioniert die Prüfobjektidentifizierung wie folgt: Zur Identifizierung eines Prüfobjekts wird dieses Prüfobjekt mittels einer Objektserfassungseinheit erfasst und daraus die Prüfobjektdaten generiert. Als Objektserfassungseinheit dient beispielsweise eine Flächenkamera. Bei dieser Erfassung wird bevorzugt nicht das gesamte Prüfobjekt erfasst, sondern nur ein Muster des Prüfobjekts. Dieses Muster ist Bestandteil des Prüfobjekts. Dabei kann das Prüfobjekt auch ein Aufkleber sein. Diese Prüfobjektdaten werden an die computergestützte Auswerteeinheit übergeben und von dieser verarbeitet und bereitgestellt. Diese computergestützte Auswerteeinheit weist eine Lageidentifikationseinheit, eine Prüfbereichsbestimmungseinheit, einen Signaturgenerator, eine Signaturvergleichseinheit und eine Signaturklassifikationseinheit auf. Die Lageidentifikationseinheit bestimmt anhand eines charakteristischen Merkmals des Prüfobjekts, hier Prüfobjektmerkmal genannt, die Prüfobjektlage. Die Prüfobjektlage ist charakterisiert durch die Pose des Musters des Prüfobjekts relativ zur Objekterfassungseinheit. Ferner bestimmt die Prüfbereichsbestimmungseinheit mit Hilfe eines Prüfobjektmerkmals einen Prüfbereich auf dem Muster. Dieser Prüfbereich erstreckt sich entlang einer Prüfbereichsbegrenzung auf dem Muster. Der Signaturgenerator extrahiert aus den Prüfobjektdaten, welche innerhalb dieses Prüfbereichs liegen, Signaturdaten und generiert aus diesen Signaturdaten eine Prüfbereichssignatur. Die Signaturvergleichseinheit vergleicht schließlich die Prüfbereichssignatur des Musters einer ersten Mustererfassung mit der Prüfbereichssignatur des Musters einer zweiten Mustererfassung. Aus dem Vergleichsergebnis wird eine Signaturabweichung generiert. Für den Vergleich zweier Prüfbereichssignaturen ist es erforderlich, dass der Prüfbereich des Musters der zweiten Mustererfassung in der gleichen Prüfobjektlage bestimmt wird wie der Prüfbereich aus der ersten Mustererfassung. Dabei gilt eine geringfügige Abweichung in der Prüfobjektlage bei erster und zweiter Mustererfassung noch als gleiche Prüfobjektlage.

Tritt nun das Problem auf, dass das Prüfobjektmerkmal, welches bei der ersten Mustererfassung zur Bestimmung der Prüfobjektlage verwendet wurde, nicht mehr vorhanden ist, so wird ein weiteres Prüfobjektmerkmal zur Bestimmung von Prüfobjektlage und Prüfbereich verwendet. Dabei ist dieses weitere Prüfobjektmerkmal in den Prüfobjektdaten der ersten Mustererfassung und der zweiten Mustererfassung enthalten.

Zur eindeutigen Identifizierung eines Prüfobjekts ist es somit nicht erforderlich, das gesamte Prüfobjekt zu erfassen, sondern lediglich ein Muster und das auch nur abschnittsweise. Dies führt zu geringeren zu verarbeitenden Datenmengen und damit zu höheren Geschwindigkeiten bei der Identifikation eines Prüfobjekts. Dies ist insbesondere von Bedeutung vor dem Hintergrund, dass moderne Objekterfassungseinheiten eine sehr hohe Auflösung aufweisen und somit große Datenmengen produzieren.

Eine weitere Ausführungsform der Erfindung ist dadurch gekennzeichnet, dass die Prüfbereichssignatur zusammen mit weiteren Daten gespeichert wird. Weitere Daten sind relevante Daten wie Ort, Datum und Uhrzeit. Diese Daten werden unter dem Identifikator dieser Prüfbereichssignatur oder als separate Einträge gespeichert.

Eine vorteilhafte Ausgestaltung des Objektidentifikationssystems ist dadurch gekennzeichnet, dass die Objekterfassungseinheit als Teil eines mobilen Endgeräts ausgebildet ist.

Ein mobiles Endgerät im Sinne der Erfindung ist aufgrund seiner Größe und/oder seines Gewichts ohne größere körperliche Anstrengung tragbar und somit mobil einsetzbar. Ein derartiges Endgerät ist mit einem Daten- oder Telekommunikationsnetz verbindbar. Es ist beispielsweise ausgebildet als eine mobile Datenerfassungseinheit, wie beispielsweise ein Mobiltelefon, ein Smartphone, eine Smartwatch, ein Tablett PC, ein Notebook, ein Imager oder eine Kombination aus zumindest zwei der Vorgenannten. Ein Imager ist eine mobile Kamera mit integrierter Beleuchtung.

In einer Ausführungsform der Erfindung ist das mobile Endgerät permanent oder über einen bestimmten Zeitraum mit einem Daten- und/oder Telekommunikationsnetz verbunden.

In einer weiteren Ausführungsform der Erfindung werden die Prüfbereichssignaturen lokal auf dem mobilen Endgerät gespeichert, insbesondere diejenigen Prüfbereichssignaturen, von denen zu erwarten ist, dass sie verwendet und/oder benötigt werden. Dies ermöglicht eine Nutzung des Objektidentifikationssystems ohne permanente Verbindung mit einem Daten- oder Telekommunikationsnetz.

Eine vorteilhafte Ausgestaltung des Objektidentifikationssystems ist dadurch gekennzeichnet, dass der Prüfbereich mit Hilfe eines bereitgestellten CAD-Modells des Prüfobjekts bestimmt wird.

In einer Ausführungsform der Erfindung wird das CAD-Modell der Prüfbereichsbestimmungseinheit beispielsweise mit Hilfe einer Datenbank, eines Speichermediums oder einer anderen geeigneten Übertragungsweise bereitgestellt.

In einer bevorzugten Ausführungsform der Erfindung enthält das bereitgestellte CAD-Modell einen durch eine Prüfbereichsbegrenzung begrenzten Prüfbereich.

Eine vorteilhafte Ausgestaltung des Objektidentifikationssystems ist dadurch gekennzeichnet, dass die computergestützte Auswerteeinheit ferner aufweist
eine Bildqualitätssicherungseinheit,
wobei die Bildqualitätssicherungseinheit aus Teilen der Prüfobjektdaten einen Istqualitätsvektor bildet, diesen Istqualitätsvektor mit einem Sollqualitätsvektor vergleicht und daraus eine Qualitätsdifferenz bildet und diese Qualitätsdifferenz anhand eines Bildeigenschaftskomponenten enthaltenden Qualitätsschwellwertvektors klassifiziert,
wobei Istqualitätsvektor und Sollqualitätsvektor nach Art und Anzahl gleiche Bildeigenschaftskomponenten enthalten,
wobei der Qualitätsschwellwertvektor gebildet ist aus dem paarweisen Vergleich der Bildeigenschaftskomponenten von Sollqualitätsvektor und Istqualitätsvektor.

Bildeigenschaftskomponenten sind bevorzugt gebildet aus Bildschärfe, Bildhelligkeit, Bildkontrast, Verzeichnung, Farbverlauf, Grauwerte, Position oder Drehlage oder einer Kombination zumindest zwei der Vorgenannten. Die vorstehend genannten Bildeigenschaftskomponenten sind nur beispielhaft und nicht abschließend.

Ein großer Unterschied von Sollwert und Istwert in lediglich einer Bildeigenschaftskomponente, beispielsweise der Bildschärfe, ist ausreichend, um die Qualitätsdifferenz als zu groß für eine Weiterverarbeitung zu klassifizieren.

Ein Sollqualitätsvektor enthält die Mindestanforderungen an Bildinformationen, welche für die weitere Bildverarbeitung mindestens erforderlich sind. Der Sollqualitätsvektor enthält lediglich die für die Beurteilung der Bildqualität geeigneten Bildinformationen, insbesondere Informationen zu Bildschärfe, Bildhelligkeit, Bildkontrast, Verzeichnung, Drehlage, oder Farbverlauf sowie weitere in der Bildverarbeitung übliche Bildmerkmale oder eine Kombination mehrerer aus den Vorgenannten. Diese Mindestanforderungen sind meist technisch bedingt und/oder werden, beispielsweise vom Nutzer des Systems, vorgegeben.

Ein Istqualitätsvektor enthält die in den Prüfobjektdaten enthaltenen, also tatsächlichen, Informationen zu Bildeigenschaftskomponenten wie Bildschärfe, Bildhelligkeit, Bildkontrast, Verzeichnung, Drehlage oder Farbverlauf oder eine Kombination mehrerer aus den Vorgenannten.

Beim paarweisen Vergleich der Bildeigenschaftskomponenten von Sollqualitätsvektor und Istqualitätsvektor ist es nicht erforderlich, alle vorgenannten Bildeigenschaftskomponenten zu verwenden. Ein derartiger paarweiser Vergleich ist auch nur anhand einer oder zweier Bildeigenschaftskomponenten möglich. Für den paarweisen Vergleich ist aber erforderlich, dass sowohl Sollqualitätsvektor als auch Istqualitätsvektor die gleichen vergleichenden Bildeigenschaftskomponenten aufweisen, beispielsweise Bildschärfe und Verzeichnung.

Umgangssprachlich ausgedrückt enthält der Sollqualitätsvektor die Sollwerte der erforderlichen Bildeigenschaftskomponenten und der Istqualitätsvektor enthält die tatsächlichen Werte der Bildeigenschaftskomponenten, quasi wie bei einem Zeugnis.

Der Qualitätsschwellwertvektor enthält die Qualitätsdifferenzen der Bildeigenschaftskomponenten, welche aus dem paarweisen Vergleich der Bildeigenschaftskomponenten von Sollqualitätsvektor und Istqualitätsvektor gebildet wurden.

Die Signalisierungseinheit ist derart ausgebildet und eingerichtet, dass sie insbesondere die Prüfbereichsabweichung, die Qualitätsdifferenz, die Signaturabweichung oder eine Kombination mindestens zweier davon anzeigt.

Eine vorteilhafte Ausgestaltung des Objektidentifikationssystems ist dadurch gekennzeichnet, dass die Bildqualitätssicherungseinheit die Qualitätsdifferenz einer Bildeigenschaftskomponente anzeigt. Liegt die Qualitätsdifferenz einer Bildeigenschaftskomponente unterhalb eines definierten Qualitätsschwellwertes so gilt diese Bildeigenschaftskomponente als qualitativ ausreichend für die weitere Verwendung, insbesondere für die Bestimmung der Prüfobjektlage. Dieser Qualitätsschwellwert wird je nach Prüfobjekt definiert.

In einer bevorzugten Ausführungsform der Erfindung gibt die Bildqualitätssicherungseinheit zusätzlich zur Qualitätsdifferenz auch Hinweise zur Korrektur der Bildqualität. Derartige Hinweise sind beispielsweise Positionierungshinweise für die Objekterfassungseinheit und/oder das Prüfobjekt, insbesondere Hinweise wie Objekterfassungseinheit / Prüfobjekt verschieben, drehen und/oder Abstand verringern oder vergrößern.

Eine vorteilhafte Ausgestaltung des Objektidentifikationssystems ist dadurch gekennzeichnet, dass die Bildqualitätssicherungseinheit eine Bildeigenschaftskomponente des Istqualitätsvektors korrigiert bis die Qualitätsdifferenz dieser Bildeigenschaftskomponente unter einem Qualitätsschwellwert liegt.

In einer bevorzugten Ausführungsform der Erfindung erkennt die Bildqualitätssicherungseinheit, dass die Qualitätsdifferenz auf einer Verdrehung in der Ebene des Musters der zweiten Mustererfassung gegenüber dem Muster der ersten Mustererfassung beruht. Die Bildqualitätssicherungseinheit korrigiert mittels eines Algorithmus' die Prüfobjektdaten derart, dass die Prüfobjektdaten des Musters der zweiten Mustererfassung gedreht werden bis die Verdrehung gegenüber dem Muster der ersten Mustererfassung so gering ist, dass die Qualitätsdifferenz unter dem als ausreichend qualifizierten Qualitätsschwellwert liegt. Diese gedrehten, d.h. entsprechend der Verdrehung des Musters adaptierten, Prüfobjektdaten werden nachfolgend verwendet, den Prüfbereich zu bestimmen, daraus die Signaturdaten zu gewinnen und folgend die Prüfbereichssignatur zu erhalten. Mit anderen Worten zusammengefasst: Die Bildqualitätssicherungseinheit dreht die Prüfobjektdaten des Musters der zweiten Mustererfassung in die Position des Musters der ersten Mustererfassung. Voraussetzung hierfür ist, dass sich diese beiden Muster in einer Ebene oder annähernd in einer Ebene befinden.

In einer weiteren bevorzugten Ausführungsform der Erfindung erkennt die Bildqualitätssicherungseinheit, dass die Qualitätsdifferenz auf einer Verschiebung in der Ebene des Musters der zweiten Mustererfassung gegenüber dem Muster der ersten Mustererfassung beruht. Die Bildqualitätssicherungseinheit korrigiert mittels eines Algorithmus' die Prüfobjektdaten derart, dass die Prüfobjektdaten des Musters der zweiten Mustererfassung verschoben werden bis die Verschiebung gegenüber dem Muster der ersten Mustererfassung so gering ist, dass die Qualitätsdifferenz unter dem als ausreichend qualifizierten Qualitätsschwellwert liegt. Diese verschobenen, d.h. entsprechend der Verschiebung des zweiten Musters adaptierten, Prüfobjektdaten werden nachfolgend verwendet, den Prüfbereich zu bestimmen, daraus die Signaturdaten zu gewinnen und folgend die Prüfbereichssignatur zu erhalten. Mit anderen Worten zusammengefasst: Die Bildqualitätssicherungseinheit verschiebt die Prüfobjektdaten des Musters der zweiten Mustererfassung in die Position des Musters der ersten Mustererfassung. Voraussetzung hierfür ist, dass sich diese beiden Muster in einer Ebene oder annähernd in einer Ebene befinden.

In einer weiteren bevorzugten Ausführungsform der Erfindung erkennt die Bildqualitätssicherungseinheit, dass die Qualitätsdifferenz auf einem Abstandsunterschied des Musters der zweiten Mustererfassung gegenüber dem Muster der ersten Mustererfassung beruht, wobei beide Muster parallel oder annähernd parallel zueinander angeordnet sind. Die Bildqualitätssicherungseinheit korrigiert mittels eines Algorithmus' die Prüfobjektdaten der zweiten Mustererfassung, indem die Prüfobjektdaten der zweiten Mustererfassung in die Position bewegt werden bis eine Bildschärfe erreicht wird, die unter einem bestimmen Schwellwert liegt, der als ausreichende Bildschärfe definiert ist. Hierbei sind geringe Abweichung in der Parallelität beider Muster vom Erfindungsgedanken mit abgedeckt. In einer bevorzugten Ausführungsform der Erfindung erfolgt die Korrektur des vorgenannten Abstandsunterschieds mittels zoomen.

In einer alternativen Ausführungsform der Erfindung erkennt die Bildqualitätssicherungseinheit, dass die Qualitätsdifferenz auf einem Abstandsunterschied, einer Verdrehung, einer Verschiebung und/oder einer Schieflage in der Ebene des Musters der zweiten Mustererfassung gegenüber dem Muster der ersten Mustererfassung beruht. Die Bildqualitätssicherungseinheit fordert durch ein Signal zur Korrektur der Verdrehung, der Verschiebung, des Abstandsunterschiedes und/oder der Schieflage in der Ebene der zweiten Mustererfassung durch Lagekorrektur der Objekterfassungseinheit und/oder des Prüfobjekts auf. Das vorgenannte Signal kann ein elektrisches Signal an ein teil-/vollautomatisiertes Handlingsystem wie einen Roboter oder ein grafisches Signal für einen menschlichen Benutzer, beispielsweise im Fall eines handgehaltenen mobilen Endgerätes, sein. Die Anpassung der Lage der Objekterfassungseinheit und/oder des Musters der zweiten Mustererfassung wird so lange wiederholt, bis die Qualitätsdifferenz den definierten Qualitätsschwellwert unterschreitet.

In einer weiteren Ausführungsform der Erfindung erkennt die Bildqualitätssicherungseinheit, dass die Qualitätsdifferenz auf einem Abstandsunterschied oder einer Verdrehung oder Verschiebung von Muster der zweiten Mustererfassung gegenüber dem Muster der ersten Mustererfassung und einer Schieflage in der Ebene beider vorgenannten Muster zueinander beruht. Hierbei wird in einer Ausführungsform der Erfindung zunächst die Schieflage beider Muster zueinander in der Ebene durch ein teil-/vollautomatisiertes Handlingsystem oder durch den Benutzer korrigiert. Anschließend wird die Verdrehung oder Verschiebung in der Ebene oder die parallele Abstandsverschiebung des Musters der zweiten Mustererfassung mittels eines Algorithmus' korrigiert. In einer anderen Ausführungsform der Erfindung wird zunächst die Verdrehung oder Verschiebung in der Ebene oder die parallele Abstandsverschiebung des Musters der zweiten Mustererfassung mittels eines Algorithmus' korrigiert und anschließend die Schieflage beider vorgenannten Muster zueinander in der Ebene durch ein teil-/vollautomatisiertes Handlingsystem oder durch den Benutzer korrigiert.

Eine Abweichung von wenigen Prozent gilt als annähernd parallel oder in einer Ebene befindlich für die vorgenannten Ausführungsformen der Erfindung

Die oben genannte Aufgabe wird auch durch ein Verfahren zum Identifizieren eines Prüfobjekts gelöst, welches die folgenden Schritte aufweist:
- Erfassen eines Musters und eines Prüfobjektmerkmals eines Prüfobjekts mit einer Objekterfassungseinheit,
- Generieren von Prüfobjektdaten aus dem erfassten Muster und dem Prüfobjektmerkmal,
- Identifizieren einer Prüfobjektlage mit Hilfe des Prüfobjektmerkmals aus den Prüfobjektdaten, wobei die Pose des Prüfobjekts relativ zur Objekterfassungseinheit die Prüfobjektlage bildet,
- Bestimmen eines Prüfbereichs, welcher sich in der Prüfobjektlage entlang einer Prüfbereichsbegrenzung auf dem Muster erstreckt,
- Erzeugen von Signaturdaten aus Prüfobjektdaten, welche innerhalb des Prüfbereichs liegen,
- Generieren einer Prüfbereichssignatur aus den Signaturdaten,
- Vergleichen der Prüfbereichssignatur eines Musters einer zweiten Mustererfassung mit der Prüfbereichssignatur eines Musters einer ersten Mustererfassung, wobei der Prüfbereich des Musters der zweiten Mustererfassung in der gleichen Prüfobjektlage des Prüfobjekts bestimmt ist wie der Prüfbereich des Musters der ersten Mustererfassung,
- Bestimmen einer Signaturabweichung aus dem Vergleich der Prüfbereichssignatur einer zweiten Mustererfassung und der Prüfbereichssignatur einer ersten Mustererfassung, und
- Klassifizieren der Signaturabweichung.

Soweit zuvor Aspekte der Erfindung im Hinblick auf das System beschrieben werden, so gelten diese auch für das entsprechende Verfahren zum Identifizieren eines Prüfobjekts und umgekehrt. Soweit das Verfahren mit einem System gemäß dieser Erfindung ausgeführt wird, so weist dieses die entsprechenden Einrichtungen hierfür auf. Insbesondere sind Ausführungsformen des Systems zum Ausführen der hier beschriebenen Ausführungsformen des Verfahrens geeignet.

Eine vorteilhafte Ausgestaltung des Verfahrens zum Identifizieren eines Prüfobjekts ist gekennzeichnet durch
- Bilden eines Istqualitätsvektors und eines Sollqualitätsvektors jeweils mit Bildeigenschaftskomponenten aus Teilen der Prüfobjektdaten, wobei Istqualitätsvektor und Sollqualitätsvektor nach Art und Anzahl gleiche Bildeigenschaftskomponenten enthalten;
- paarweises Vergleichen der Bildeigenschaftskomponenten von Istqualitätsvektor und Sollqualitätsvektor;
- Bilden einer Qualitätsdifferenz der Bildeigenschaftskomponenten von Istqualitätsvektor und Sollqualitätsvektor;
- Klassifizieren der Qualitätsdifferenz mittels eines Bildeigenschaftskomponenten enthaltenden Qualitätsschwellwertvektors.

Eine vorteilhafte Ausgestaltung des Verfahrens zum Identifizieren eines Prüfobjekts ist gekennzeichnet durch Anzeigen der Qualitätsdifferenz einer Bildeigenschaftskomponente.

Eine vorteilhafte Ausgestaltung des Verfahrens zum Identifizieren eines Prüfobjekts ist gekennzeichnet durch Korrigieren einer Bildeigenschaftskomponente des Istqualitätsvektors bis die Qualitätsdifferenz dieser Bildeigenschaftskomponente unter einem Qualitätsschwellwert liegt.

Das Korrigieren der Bildeigenschaftskomponente des Istqualitätsvektors erfolgt durch den Nutzer selbst oder mit Hilfe eines Algorithmus'.

Weitere Vorteile, Merkmale und Anwendungsmöglichkeiten der vorliegenden Erfindung werden anhand der folgenden Beschreibung von Ausführungsformen und der dazugehörigen Figuren deutlich.

In den Figuren sind identische Elemente mit identischen Bezugszeichen bezeichnet.
Figur 1 zeigt in einer schematischen Darstellung einen Abschnitt eines Prüfobjekts mit einem Muster, einem Prüfbereich, einer Prüfbereichsbegrenzung und vier Prüfobjektmerkmalen.
Figur 2 zeigt eine Ausführungsform eines erfindungsgemäßen Objektidentifikationssystems zum Prüfen eines Prüfobjekts.
Figur 3 zeigt eine Ausführungsform eines erfindungsgemäßen Objektidentifikationssystems zum Prüfen eines Prüfobjekts nachdem das Prüfobjekt einen Bearbeitungsschritt durchlaufen hat.
Figur 4 zeigt in einem schematisierten Ablauf wie aus Prüfobjektdaten eine Signaturabweichung generiert wird.
Figur 5 zeigt ein Beispiel für das Ergebnis einer Signaturabweichung aus einem Signaturvergleich.
Figur 6 zeigt zwei erfasste Muster in unterschiedlicher Bildqualität.
Figur 7 zeigt drei in unterschiedlichen Drehwinkeln erfasste Muster.
Figur 8 zeigt das Prüfobjekt aus Figur 1 mit einem gegenüber Figur 1 vergrößertem Muster.
Figur 9 zeigt das Prüfobjekt aus Figur 1 mit einem gegenüber Figur 1 zusätzlichen Muster und Prüfbereich.
Figur 10 zeigt beispielhaft den auf einem Signaturvergleich beruhenden Mustervergleich eines Musters mit drei bereits erfassten Mustern.

In den hier beschriebenen beispielhaften Realisierungen der Erfindung gilt es, ein Prüfobjekt 12 zu identifizieren.

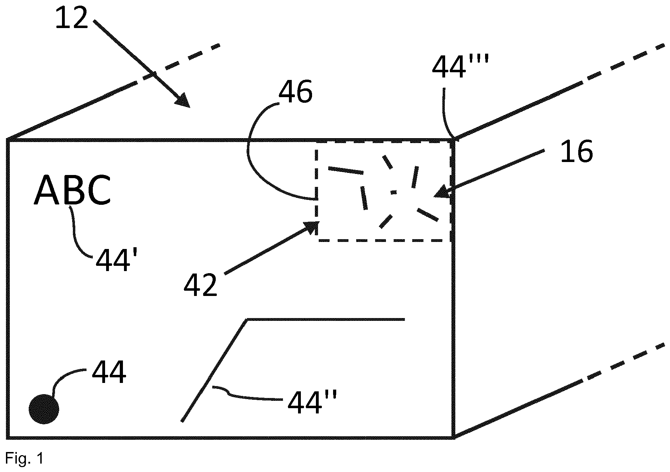

Die Figur 1 zeigt in schematischer Darstellung ein Prüfobjekt 12 mit einer rechteckigen Fläche. Auf dieser rechteckigen Fläche des Prüfobjekts 12 sind beispielhaft vier Prüfobjektmerkmale 44, 44', 44", 44'" dargestellt. Das Prüfobjektmerkmal 44 ist hier gebildet durch eine hier als Kreis dargestellte runde Bohrung, das Prüfobjektmerkmal 44' ist gebildet durch die Buchstabenfolge "ABC", Prüfobjektmerkmal 44" ist gebildet durch zwei, hier als Linien dargestellte, in einem flachen Winkel miteinander verbundene Nuten und das Prüfobjektmerkmal 44'" ist gebildet durch die rechte obere Ecke der dargestellten rechteckigen Fläche mit einem rechten Winkel.

Im rechten oberen Bereich der rechteckigen Fläche des Prüfobjekts 12 ist ein Muster 16 dargestellt. Das Muster 16 ist in allen dargestellten Ausführungsformen ein Bestandteil des Prüfobjekts 12 und somit nicht vom Prüfobjekt trennbar, ohne dass das Muster 16 oder das Prüfobjekt 12 zerstört oder zumindest eines der beiden in seinem Wesen verändert wird. Das Muster 16 ist hier gebildet durch ein, durch Linien dargestelltes Höhen-Tiefenprofil auf der Oberfläche des Prüfobjekts 12. Dieses Höhen-Tiefenprofil ist beispielsweise eine Maserung einer Holzoberfläche, die Feinstruktur eines Papiers, einer Pappe oder einer Kunststoffoberfläche, die raue Oberfläche eines metallischen Gussteils oder eines Halbzeugs vor oder nach einem Bearbeitungsschritt, z.B. vor oder nach dem Fräsen.

Auf dem Muster 16 erstreckt sich ein Prüfbereich 42, welcher die gesamte Fläche des Musters 16 umschließt. Der Prüfbereich 42 wird begrenzt durch eine Prüfbereichsbegrenzung 46. Im dargestellten Fall erstreckt sich der Prüfbereich 42 in rechteckiger Form von einem Ursprung entlang der durch die Prüfbereichsbegrenzung 46 eingeschlossenen Fläche. In einem in der Figur 1 nicht dargestellten Fall erstreckt sich der Prüfbereich 42 nur teilweise auf dem Muster 16.

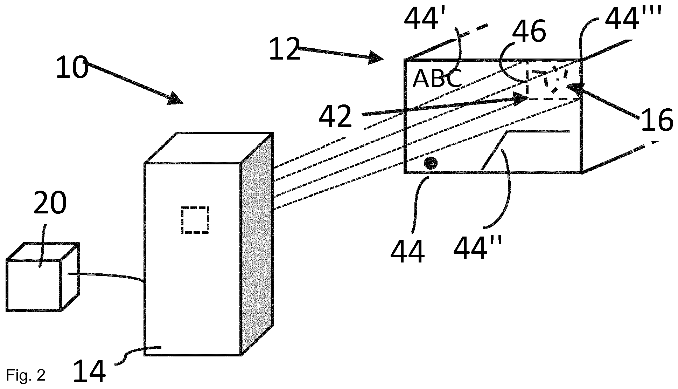

Die Figur 2 zeigt in schematischer Darstellung eine Ausführungsform eines erfindungsgemäßen Objektidentifikationssystems 10 zum Prüfen des Prüfobjekts 12. Das dargestellte Objektidentifikationssystems 10 umfasst eine Objekterfassungseinheit 14 sowie eine mit dieser Objekterfassungseinheit 14 verbundene computergestützte Auswerteeinheit 20. Die Objekterfassungseinheit 14 ist hier beispielhaft gebildet durch eine Flächenkamera oder ein mobiles Endgerät mit einer Kamera. Diese Objekterfassungseinheit 14 ist im hier dargestellten Fall via Datenverbindung mit einer externen computergestützten Auswerteeinheit 20 verbunden.

Das Erfassen des bereits in Figur 1 beschriebenen Prüfobjekts 12 geschieht wie folgt: Die Objekterfassungseinheit 14 erfasst das bereits beschriebene Muster 16 des Prüfobjekts 12 sowie die Prüfobjektmerkmale 44, 44', 44". 44"'.

Die Daten des erfassten Musters 16 sowie die Daten zu den
Prüfobjektmerkmalen 44, 44', 44", 44'" werden als hier nicht dargestellte Prüfobjektdaten 18 an die computergestützte Auswerteeinheit 20 übergeben. Diese Prüfobjektdaten 18 werden in weiteren hier nicht dargestellten Einheiten verarbeitet. Da das erfasste Muster nur in einer einzigen Lage der Objekterfassungseinheit gegenüber dem Muster genau in dieser Art zu erfassen ist, gelingt durch Erfassen von beispielsweise Position, Größe und Bildschärfe eines der Prüfobjektmerkmale 44, 44', 44", 44'" die Bestimmung einer Prüfobjektlage. Diese Prüfobjektlage ist gebildet aus der Pose des Prüfobjekts 12 relativ zur Objekterfassungseinheit 14.

Die Bestimmung Prüfobjektlage des Prüfobjekts 12 wird in Figur 2 anhand der Position, Größe und Bildschärfe des Prüfobjektmerkmals 44"', also der rechten oberen Ecke des Prüfobjekts 12, durchgeführt.

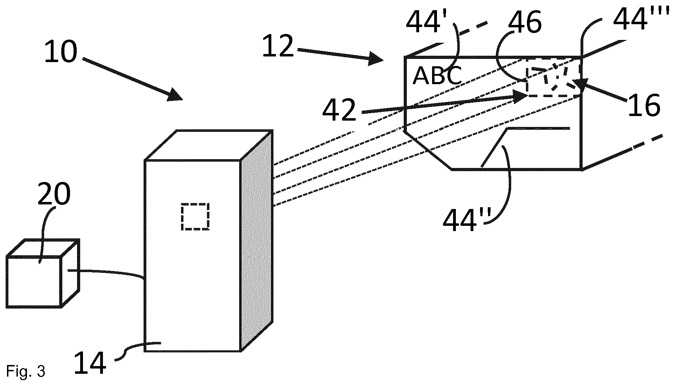

Die Figur 3 zeigt das Prüfobjekt 12 aus Figur 2 beispielsweise nach einem Bearbeitungsschritt. Im Gegensatz zu den in Figur 2 beschriebenen Prüfobjektdaten 18 werden hier Prüfobjektdaten 18' an die computergestützte Auswerteeinheit 20 übergeben. Die Prüfobjektdaten 18' enthalten die Daten eines erfassten Musters 16 sowie die Daten zu den Prüfobjektmerkmalen 44', 44", 44'".

Ein wesentlicher Unterschied der Prüfobjektdaten 18' besteht also darin, dass in diesem Fall das Prüfobjektmerkmal 44, also die durch einen Punkt dargestellte Bohrung, nicht mehr vorhanden ist, da die linke untere Ecke des Prüfobjekts 12 beispielsweise in einem Frässchritt entfernt wurde. Somit stehen nur noch die Prüfobjektmerkmale 44', 44", 44'" zur Verfügung, welche nun zur Bestimmung der Prüfobjektlage des Prüfobjekts 12 verwendet werden. Hierbei zeigt sich die Vorteilhaftigkeit der Erfassung mehrerer Prüfobjektmerkmale. Wäre vor der Bearbeitung ausschließlich das Prüfobjektmarkmal 44 erfasst worden, so gelänge die Bestimmung der Prüfobjektlage des Prüfobjekts 12 in der beschriebenen Weise nicht mehr.

Im Gegensatz zur Verwendung nur eines Prüfobjektmerkmals zur Bestimmung der Prüfobjektlage des Prüfobjekts, gelingt durch Nutzung mehrerer Prüfobjektmerkmale die Bestimmung der Prüfobjektlage auch dann, wenn ein Prüfobjektmerkmal nicht mehr vorhanden oder beschädigt ist.

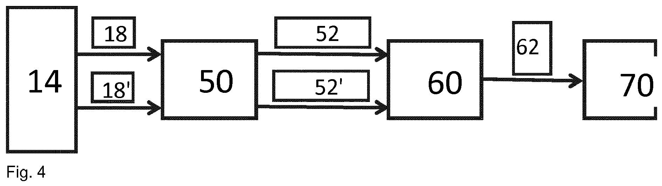

Die Figur 4 zeigt in einem schematisierten Ablauf wie aus Prüfobjektdaten 18 und 18' eine Signaturabweichung 70 generiert wird. Eine hier nicht dargestellte Lageidentifikationseinheit erhält die Prüfobjektdaten 18 beziehungsweise 18'.

Die Prüfobjektdaten 18 sind aus einer ersten Mustererfassung des Musters gewonnen, während die Prüfobjektdaten 18' aus einer zweiten Mustererfassung des Musters gewonnen sind.

Die Prüfobjektdaten 18 enthalten die Daten zu Position, Größe und Bildschärfe eines erfassten Prüfobjektmerkmals des ersten Prüfobjekts sowie Daten eines erfassten Musters dieses ersten Prüfobjekts. In der Figur 4 sind weder Prüfobjektmerkmal noch Prüfobjekt oder Muster der ersten Mustererfassung dargestellt. Aus den Daten zu Position, Größe und Bildschärfe des Prüfobjektmerkmals dieser ersten Musterfassung speichert die Lageidentifizierungseinheit Daten, welche die Pose des ersten Prüfobjekts und die relative Lage der hier nicht dargestellten Objekterfassungseinheit zum Prüfobjekt beschreiben. Diese erste Pose bildet zusammen mit der relativen Lage der hier ebenso nicht dargestellten Objekterfassungseinheit zum Prüfobjekt eine erste Prüfobjektlage. In dieser ersten Prüfobjektlage bestimmt eine hier ebenfalls nicht dargestellte Prüfbereichsbestimmungseinheit einen Prüfbereich. Dieses Bestimmen des Prüfbereichs erfolgt beispielsweise so: Ausgehend vom Prüfobjektmerkmal der ersten Mustererfassung wird entlang der hier nicht dargestellten Prüfbereichsbegrenzungen der Prüfbereich bestimmt, sozusagen virtuell auf das Muster des Prüfobjekts gelegt. Die Prüfbereichsbegrenzungen umschließen den Prüfbereich auf dem Muster. Alle Prüfobjektdaten, die nicht von den Prüfbereichsbegrenzungen umschlossen werden, werden verworfen. Die Prüfobjektdaten, die von den Prüfbereichsbegrenzungen umschlossen werden, d.h. innerhalb des Prüfbereichs liegen, werden als hier nicht dargestellte Signaturdaten des Musters des Prüfobjekts weiterverarbeitet. Aus diesen Signaturdaten generiert ein Signaturgenerator 50 eine Prüfbereichssignatur 52. Diese Prüfbereichssignatur 52 bildet die Charakteristika des erfassten Musters in einer Kombination von geeigneten Zeichen ab.

Die Prüfobjektdaten 18' enthalten die Daten zu Position, Größe und Bildschärfe eines erfassten Prüfobjektmerkmals des zweiten Prüfobjekts sowie Daten eines erfassten Musters dieses zweiten Prüfobjekts. In der Figur 4 sind weder Prüfobjektmerkmal noch Prüfobjekt oder Muster der zweiten Mustererfassung dargestellt.

Aus den Daten zu Position, Größe und Bildschärfe des Prüfobjektmerkmals dieser zweiten Musterfassung bestimmt die Lageidentifikationseinheit die Prüfobjektlage des zweiten Prüfobjekts. Die Prüfobjektlage des zweiten Prüfobjekts wird aber nicht als absolute Prüfobjektlage bestimmt, sondern in Relation zur Prüfobjektlage des ersten Prüfobjekts, somit als relative Prüfobjektlage. Damit der Prüfbereich des Musters der zweiten Mustererfassung in der gleichen Prüfobjektlage des Prüfobjekts bestimmt werden kann wie der Prüfbereich des Musters der ersten Mustererfassung ist es also erforderlich das erste Prüfobjektlage und zweite Prüfobjektlage gleich oder annähernd gleich sind. Erst wenn die Abweichung von erster und zweiter Prüfobjektlage einen bestimmten Schwellwert unterschreitet wird auf dem Muster des zweiten Prüfobjekts ein Prüfbereich bestimmt. Das Bestimmen des Prüfbereichs auf dem Muster des zweiten Prüfobjekts und einer Prüfbereichssignatur erfolgt analog zum oben bereits beschriebenen Generieren des Prüfbereichs des Musters des ersten Prüfobjekts. Dabei wird die Prüfbereichssignatur 52' erhalten. Die Prüfbereichssignatur 52' wird nun verglichen mit bereits vorhandenen Prüfbereichssignaturen, also hier mit der Prüfbereichssignatur 52. Dieser Signaturvergleich erfolgt in einer Signaturvergleichseinheit 60. Die Signaturvergleichseinheit 64 liefert als Ergebnis eine Signaturabweichung 62. Diese Signaturabweichung 62 wird anhand zumindest eines Schwellwertes in einer Signaturklassifikationseinheit 70 klassifiziert. Ein geeigneter Schwellwert ist die Ähnlichkeit der Prüfbereichssignatur eines Prüfobjekts zur Gesamtheit der Prüfbereichssignaturen aller Prüfobjekte. Liegt die Signaturabweichung unter dem des als noch ausreichend definierten Signaturschwellwerts, so ist die Signaturabweichung als gering anzusehen und das Prüfobjekt wird als identifiziert angesehen. Liegt hingegen die Signaturabweichung über dem des als noch ausreichend bestimmten Signaturschwellwert, so ist die Signaturabweichung als groß anzusehen und das Prüfobjekt wird als nicht identifiziert angesehen.

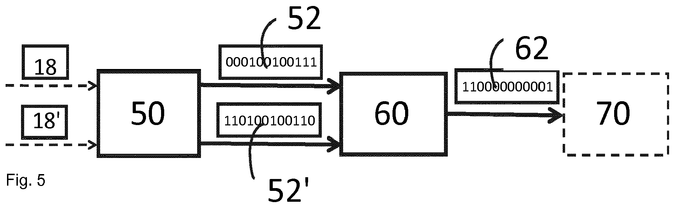

Die Figur 5 zeigt beispielhaft das Ergebnis der Signaturabweichung aus dem Signaturvergleich aus Figur 4. Dabei werden die beispielhaft wiedergegebenen Prüfbereichssignaturen 52 und 52' miteinander verglichen. Das Ergebnis dieses Signaturenvergleichs in der Signaturvergleichseinheit 60 ist die beispielhaft wiedergegebene Signaturabweichung 62, welche wiederum, wie bereits zu Figur 4 beschrieben, von der Signaturklassifikationseinheit 70 klassifiziert wird.

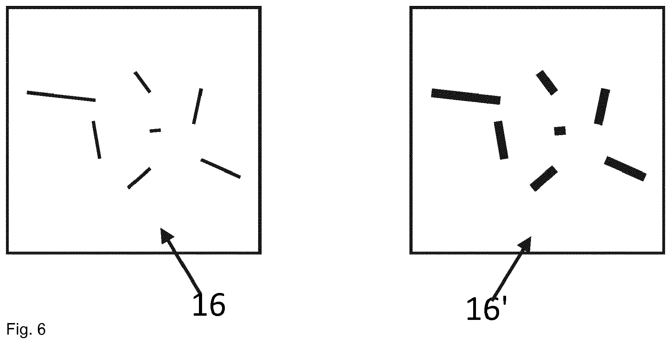

Die Figur 6 zeigt zwei erfasste Muster 16 und 16' in unterschiedlicher Bildqualität. Hierbei ist das Muster 16 verzerrungsfrei mit einer ersten Bildschärfe erfasst. Das Muster 16' hingegen zeigt Verzerrungen, sodass die einzelnen Elemente des Musters 16' dicker erscheinen. Die nicht ausreichende Bildschärfe des Musters 16' ist hier Folge beispielsweise eines zu geringen Abstands von Objekterfassungseinheit und Muster 16'. In diesem Fall wird entweder der Nutzer aufgefordert die Objekterfassungseinheit oder das Prüfobjekt mit dem Muster 16 in der Weise zu bewegen bis eine Bildschärfe erreicht wird, die unter einem bestimmen Schwellwert liegt, der als ausreichende Bildschärfe definiert ist oder die Prüfobjektdaten des erfassten Musters 16 werden mittels eines Algorithmus' verarbeitet bis eine Bildschärfe erreicht wird, die unter einem bestimmen Schwellwert liegt, der als ausreichende Bildschärfe definiert ist.

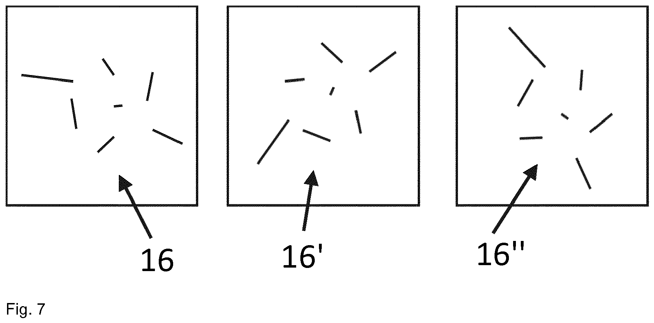

Die Figur 7 zeigt drei in unterschiedlichen Drehwinkeln erfasste Muster 16, 16', 16", welche alle in einer Ebene liegen. Das Muster 16 ist ohne Verdrehung erfasst, also mit einem Drehwinkel von 0°. Das Muster 16' ist gegenüber dem Muster 16 um 60° entgegen des Uhrzeigersinns verdreht. Das Muster 16" ist gegenüber dem Muster 16 um 40° im Uhrzeigersinn verdreht. In einem derartigen Fall erkennt die hier nicht dargestellte Lageidentifikationseinheit die Verdrehung der Muster 16' und 16" gegenüber dem Muster 16. Der Prüfbereich wird als nicht erkannt oder nicht gefunden eingeordnet. Anschließend wird entweder der Nutzer aufgefordert die Objekterfassungseinheit oder das Prüfobjekt mit dem Muster 16 zu drehen bis die Verdrehung einen als ausreichend klassifizierten Schwellwert, also eine Verdrehung von annähernd 0°, erreicht oder die Prüfobjektdaten des erfassten Musters 16' bzw. 16" werden mittels eines Algorithmus' automatisiert in die Position gedreht, bis die Verdrehung einen als ausreichend klassifizierten Schwellwert, also eine Verdrehung von annähernd 0°, erreicht. Ist durch Verdrehung der Prüfobjektdaten der als ausreichend klassifizierte Schwellwert erreicht, so werden aus den Prüfobjektdaten der erfassten Muster 16' bzw. 16" die entsprechenden Prüfbereiche bestimmt, daraus Signaturdaten erzeugt und daraus zu vergleichende Prüfbereichssignaturen generiert.

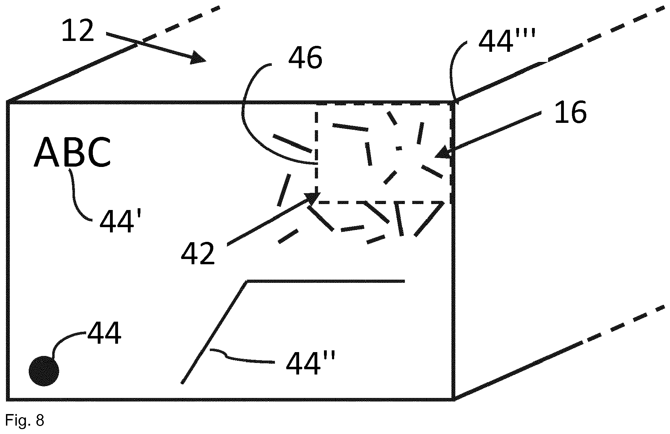

Die Figur 8 zeigt das Prüfobjekt aus Figur 1 mit einem gegenüber Figur 1 vergrößertem Muster 16. Diese Figur verdeutlicht, dass sich in einer Ausführungsform der Prüfbereich 42 nur abschnittweise auf dem Muster 16 erstreckt, sprich der Prüfbereich 42 ist kleiner als das erfasste Muster 16. Dies hat den Vorteil, dass die zu verarbeitende Datenmenge geringer ist, als würde der Prüfbereich 42 die Fläche des gesamten Musters 16 umfassen.

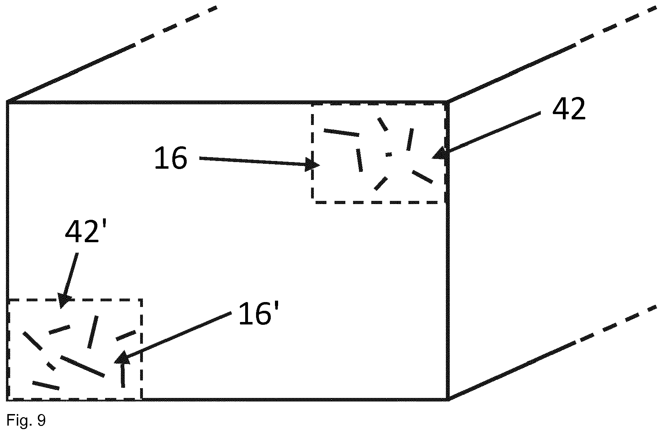

Die Figur 9 zeigt das Prüfobjekt aus Figur 1 mit einem gegenüber Figur 1 zusätzlichen Muster und Prüfbereich. Bei dieser Ausführungsform der Erfindung wird bei einer Mustererfassung nicht nur ein Muster 16 erfasst, sondern zusätzlich auch ein weiteres Muster 16'. Das weitere Muster 16' wird entsprechend der bereits beschriebenen Schritte weiterverarbeitet und daraus eine hier nicht dargestellte Prüfbereichssignatur generiert. Dies erweitert die Möglichkeit ein Prüfobjekt zu identifizieren, welches Veränderungen unterworfen ist, beispielsweise durch Bearbeitungsschritte.

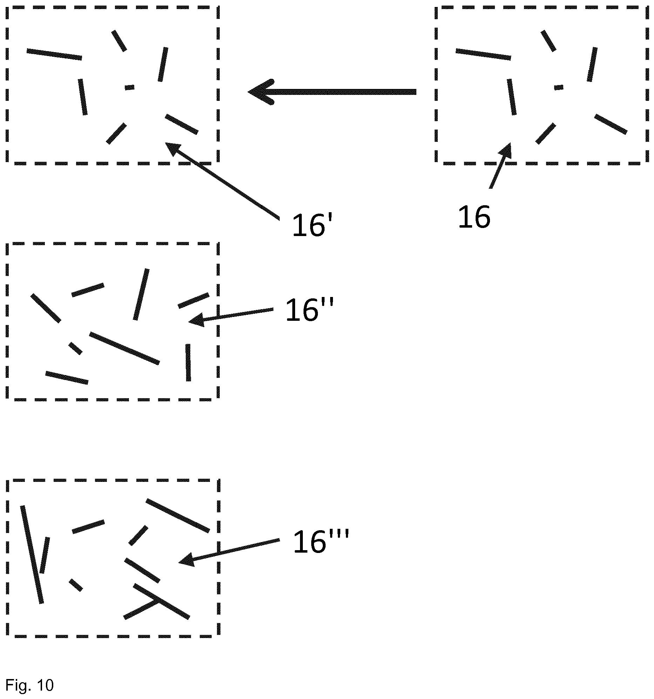

Die Figur 10 zeigt beispielhaft den auf Signaturvergleich beruhendem Mustervergleich eines Musters 16 mit drei bereits erfassten Mustern 16', 16", 16"'. Hierbei wird entsprechend der Erfindung das zuletzt erfasste Muster 16 mit drei in der Vergangenheit erfassten Mustern 16', 16", 16'" verglichen. Hierzu wird eine hier nicht dargestellte Prüfbereichssignatur, welche aus dem Muster 16 generiert wurde, verglichen mit drei hier ebenfalls nicht dargestellten Prüfbereichssignaturen, welche aus den Mustern 16', 16" und 16'" zuvor generiert worden sind. Der Vergleich der Signaturen dieser Muster erfolgt paarweise. Das bedeutet, es erfolgt der Signaturvergleich der Muster 16 und 16', dann der Signaturvergleich der Muster 16 und 16" und anschließend der Signaturvergleich der Muster 16 und 16"'. Entscheidend ist hierbei, dass das Muster 16 mit allen drei anderen Mustern 16', 16" und 16'" verglichen wird, wobei die Reihenfolge der verglichenen Signaturpaare variieren kann.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 10: Objektidentifikationssystem
- 12: Prüfobjekt
- 14: Objekterfassungseinheit
- 16, 16', 16", 16'": Muster
- 18, 18': Prüfobjektdaten
- 20: computergestützte Auswerteeinheit
- 30: Lageidentifikationseinheit
- 40: Prüfbereichsbestimmungseinheit
- 42: Prüfbereich
- 44, 44', 44", 44'": Prüfobjektmerkmal
- 46: Prüfbereichsbegrenzung
- 50: Signaturgenerator
- 52, 52': Prüfbereichssignatur
- 60: Signaturvergleichseinheit
- 62: Signaturabweichung
- 70: Signaturklassifikationseinheit
- 80: mobiles Endgerät

## Patentansprüche

1. Objektidentifikationssystem (10) für das Identifizieren eines Prüfobjekts (12) aufweisend eine
Objekterfassungseinheit (14),
die derart eingerichtet und angeordnet ist, dass sie in einem Betrieb des Objektidentifikationssystems (10) mittels einer Mustererfassung ein Muster (16) und ein Prüfobjektmerkmal (44) des Prüfobjekts (12) erfasst und daraus Prüfobjektdaten (18) generiert,
wobei das Muster (16) als ein Bestandteil des Prüfobjekts (12) ausgebildet ist, wobei das Prüfobjektmerkmal (44) als ein charakteristisches Merkmal des Prüfobjekts (12) ausgebildet ist, und
eine wirksam mit der Objekterfassungseinheit (14) verbundene computergestützte Auswerteeinheit (20), welche derart eingerichtet ist, dass sie Prüfobjektdaten (18) von der Objekterfassungseinheit (14) erhält und diese Prüfobjektdaten (18) verarbeitet und bereitstellt, aufweisend
eine deaktivierbare Lageidentifikationseinheit (30), welche derart ausgebildet und eingerichtet ist,
dass sie mit Hilfe des Prüfobjektmerkmals (44) eine Prüfobjektlage bestimmt,
wobei die Prüfobjektlage durch die Pose des Prüfobjekts (12) relativ zur Objekterfassungseinheit (14) gebildet ist,
eine Prüfbereichsbestimmungseinheit (40), welche derart ausgebildet und eingerichtet ist,
dass sie in der Prüfobjektlage einen Prüfbereich (42) bestimmt,
wobei sich der Prüfbereich (42) entlang einer Prüfbereichsbegrenzung (46) auf dem Muster (16) erstreckt,
einen Signaturgenerator (50),
welcher aus Prüfobjektdaten (18) Signaturdaten extrahiert und daraus eine Prüfbereichssignatur (52) generiert,
wobei die Signaturdaten gebildet sind durch diejenigen Prüfobjektdaten (18), welche innerhalb des Prüfbereichs (42) liegen,
eine Signaturvergleichseinheit (60),
welche derart ausgebildet und eingerichtet ist, dass sie die Prüfbereichssignatur (52) eines Musters (16) einer zweiten Mustererfassung mit der Prüfbereichssignatur (52') eines Musters (16') einer ersten Mustererfassung vergleicht und daraus eine Signaturabweichung (62) bestimmt,
wobei der Prüfbereich (42) des Musters (16) der zweiten Mustererfassung in der gleichen Prüfobjektlage des Prüfobjekts (12) bestimmt ist wie der Prüfbereich (42) des Musters (16') der ersten Mustererfassung,
eine die Signaturabweichung (62) klassifizierende Signaturklassifikationseinheit (70).

2. Objektidentifikationssystem (10) nach Anspruch 1 **dadurch gekennzeichnet, dass** die Objekterfassungseinheit (14) als Teil eines mobilen Endgeräts (80) ausgebildet ist.

3. Objektidentifikationssystem (10) nach einem der Ansprüche 1 bis 2 **dadurch gekennzeichnet, dass** der Prüfbereich (42) mit Hilfe eines bereitgestellten CAD-Modells bestimmt wird.

4. Objektidentifikationssystem (10) nach einem der Ansprüche 1 bis 3 **dadurch gekennzeichnet, dass** die computergestützte Auswerteeinheit (20) ferner aufweist
eine Bildqualitätssicherungseinheit,
wobei die Bildqualitätssicherungseinheit aus Teilen der Prüfobjektdaten (18) einen Istqualitätsvektor bildet, diesen Istqualitätsvektor mit einem Sollqualitätsvektor vergleicht und daraus eine Qualitätsdifferenz bildet und diese Qualitätsdifferenz anhand eines Bildeigenschaftskomponenten enthaltenden Qualitätsschwellwertvektors klassifiziert,
wobei Istqualitätsvektor und Sollqualitätsvektor nach Art und Anzahl gleiche Bildeigenschaftskomponenten enthalten,
wobei der Qualitätsschwellwertvektor gebildet ist aus dem paarweisen Vergleich der Bildeigenschaftskomponenten von Sollqualitätsvektor und Istqualitätsvektor.

5. Objektidentifikationssystem (10) nach einem der Ansprüche 1 bis 4 **dadurch gekennzeichnet, dass** die Bildqualitätssicherungseinheit die Qualitätsdifferenz einer Bildeigenschaftskomponente anzeigt.

6. Objektidentifikationssystem (10) nach einem der Ansprüche 1 bis 4 **dadurch gekennzeichnet, dass** die Bildqualitätssicherungseinheit die eine Bildeigenschaftskomponente des Istqualitätsvektors korrigiert bis die Qualitätsdifferenz dieser Bildeigenschaftskomponente unter einem Qualitätsschwellwert liegt.

7. Verfahren zum Identifizieren eines Prüfobjekts (12) aufweisend folgende Schritte:
- Erfassen eines Musters (16) und eines Prüfobjektmerkmals (44) eines Prüfobjekts (12) mit einer Objekterfassungseinheit (14);
- Generieren von Prüfobjektdaten (18) aus dem erfassten Muster (16) und dem Prüfobjektmerkmal (44);
- Identifizieren einer Prüfobjektlage mit Hilfe des Prüfobjektmerkmals (44) aus den Prüfobjektdaten (18), wobei die Pose des Prüfobjekts (12) relativ zur Objekterfassungseinheit (14) die Prüfobjektlage bildet;
- Bestimmen eines Prüfbereichs (42), welcher sich in der Prüfobjektlage entlang einer Prüfbereichsbegrenzung (46) auf dem Muster (16) erstreckt;
- Erzeugen von Signaturdaten aus Prüfobjektdaten (18), welche innerhalb des Prüfbereichs (42) liegen;
- Generieren einer Prüfbereichssignatur (52) aus den Signaturdaten;
- Vergleichen der Prüfbereichssignatur (52) eines Musters (16) einer zweiten Mustererfassung mit der Prüfbereichssignatur (52') eines Musters (16') einer ersten Mustererfassung, wobei der Prüfbereich (42) des Musters (16) der zweiten Mustererfassung in der gleichen Prüfobjektlage des Prüfobjekts (12) bestimmt ist wie der Prüfbereich (42) des Musters (16') der ersten Mustererfassung;
- Bestimmen einer Signaturabweichung (62) aus dem Vergleich der Prüfbereichssignatur (52) einer zweiten Mustererfassung und der Prüfbereichssignatur (52') einer ersten Mustererfassung; und
- Klassifizieren der Signaturabweichung (62).

8. Verfahren nach Anspruch 7 **gekennzeichnet durch**
- Bilden eines Istqualitätsvektors und eines Sollqualitätsvektors jeweils mit Bildeigenschaftskomponenten aus Teilen der Prüfobjektdaten (18), wobei Istqualitätsvektor und Sollqualitätsvektor nach Art und Anzahl gleiche Bildeigenschaftskomponenten enthalten;
- paarweises Vergleichen der Bildeigenschaftskomponenten von Istqualitätsvektor und Sollqualitätsvektor;
- Bilden einer Qualitätsdifferenz der Bildeigenschaftskomponenten von Istqualitätsvektor und Sollqualitätsvektor;
- Klassifizieren der Qualitätsdifferenz mittels eines Bildeigenschaftskomponenten enthaltenden Qualitätsschwellwertvektors.

9. Verfahren nach Anspruch 8 **gekennzeichnet durch** Anzeigen der Qualitätsdifferenz einer Bildeigenschaftskomponente.

10. Verfahren nach Anspruch 8 **gekennzeichnet durch** Korrigieren einer Bildeigenschaftskomponente des Istqualitätsvektors bis die Qualitätsdifferenz dieser Bildeigenschaftskomponente unter einem Qualitätsschwellwert liegt.
